(19) Europäisches Patentamt
European Patent Office
Office européen des brevets

(11) EP 4 693 498 A1

(12) **EUROPEAN PATENT APPLICATION**

(43) Date of publication:
**11.02.2026 Bulletin 2026/07**

(21) Application number: **25182629.3**

(22) Date of filing: **13.06.2025**

(51) International Patent Classification (IPC):
***H01M 4/58*** *(2010.01)* ***H01M 4/587*** *(2010.01)*
***H01M 10/052*** *(2010.01)* ***H01M 10/0525*** *(2010.01)*
***H01M 10/0567*** *(2010.01)* ***H01M 10/0568*** *(2010.01)*
***H01M 10/0569*** *(2010.01)*

(52) Cooperative Patent Classification (CPC):
**H01M 10/0567; H01M 4/5825; H01M 4/587; H01M 10/052; H01M 10/0525; H01M 10/0568; H01M 10/0569;** H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.08.2024 KR 20240104847**

(71) Applicant: **SAMSUNG SDI CO., LTD.**
**Yongin-si, Gyeonggi-do 17084 (KR)**

(72) Inventors:
- **Shin, Youngkyeong**
  **17084 Yongin-si, Gyeonggi-do (KR)**
- **Kim, Sanghoon**
  **17084 Yongin-si, Gyeonggi-do (KR)**
- **Choi, Hyunbong**
  **17084 Yongin-si, Gyeonggi-do (KR)**
- **Yang, Yeji**
  **17084 Yongin-si, Gyeonggi-do (KR)**
- **Park, Hongryeol**
  **17084 Yongin-si, Gyeonggi-do (KR)**
- **Park, Sangwoo**
  **17084 Yongin-si, Gyeonggi-do (KR)**
- **Jun, Dasol**
  **17084 Yongin-si, Gyeonggi-do (KR)**
- **Ji, Woojung**
  **17084 Yongin-si, Gyeonggi-do (KR)**
- **Kim, Sohee**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **ELECTROLYTE FOR RECHARGEABLE LITHIUM BATTERY AND RECHARGEABLE LITHIUM BATTERY INCLUDING THE SAME**

(57) Disclosed are electrolytes and rechargeable lithium batteries. The electrolyte includes a non-aqueous organic solvent, a lithium salt, and an additive. The additive includes a first compound represented by Chemical Formula 1 and a second compound represented by Chemical Formula 2.

[Chemical Formula 1]

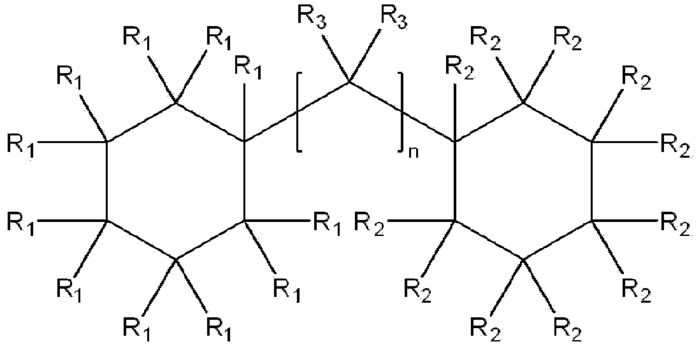

EP 4 693 498 A1

[Chemical Formula 2]

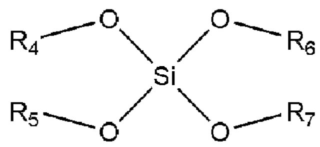

## Description

### BACKGROUND

Embodiments of the present disclosure relate to an electrolyte for a rechargeable lithium battery and a rechargeable lithium battery including the same.

Recently, with the rapid spread of battery using electronic devices, such as mobile phones, laptop computers, and electric vehicles, there is a rapidly increasing demand for rechargeable batteries having high energy density and high capacity. Therefore, intensive research has been conducted to improve performance of rechargeable lithium batteries.

A rechargeable lithium battery may include a positive electrode, a negative electrode, and an electrolyte, which positive and negative electrodes may include an active material in which intercalation and deintercalation are possible, and may generate electrical energy caused by oxidation and reduction reactions if (e.g., when) lithium ions are intercalated and deintercalated.

A lithium salt dissolved in a non-aqueous organic solvent may be used as the electrolyte of the rechargeable lithium battery. Characteristics of the rechargeable lithium battery are exhibited by complex reactions between the positive electrode and the electrolyte and between the negative electrode and the electrolyte. Accordingly, the use of a suitable or appropriate electrolyte is one variable for improvement of rechargeable lithium batteries.

### SUMMARY

The invention is defined by the appended claims. The description that follows is subjected to this limitation. Any disclosure lying outside the scope of said claims is only intended for illustrative as well as comparative purposes.

An embodiment of the present disclosure provides an additive having excellent effects of improving battery cycle-life characteristics and battery storage performance at high temperatures.

An embodiment of the present disclosure provides a rechargeable lithium battery having superior performance at high temperatures.

According to an embodiment of the present disclosure, an electrolyte for a rechargeable lithium battery may include: a non-aqueous organic solvent; a lithium salt; and an additive.

The additive may include: a first compound represented by Chemical Formula 1; and a second compound represented by Chemical Formula 2.

[Chemical Formula 1]

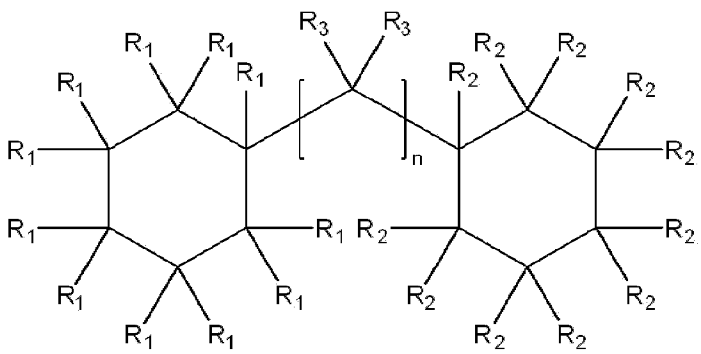

In Chemical Formula 1,

$R_1$ are each independently hydrogen, halogen, a C1 to C10 alkyl group, or an isocyanate group, wherein at least one of $R_1$ is an isocyanate group.

$R_2$ are each independently hydrogen, halogen, a C1 to C10 alkyl group, or an isocyanate group, wherein at least one of $R_2$ is an isocyanate group.

$R_3$ are each independently hydrogen or a cyclohexyl isocyanate residue.

The subscript n is an integer of 1 to 10.

[Chemical Formula 2]

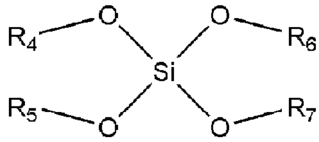

In Chemical Formula 2,

$R_4$ to $R_7$ are independently a substituted or unsubstituted C1 to C10 alkyl group.

According to an embodiment of the present disclosure, a rechargeable lithium battery includes: a positive electrode that includes a positive electrode active material; a negative electrode that includes a negative electrode active material; and the electrolyte for the rechargeable lithium battery described herein.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram showing a rechargeable lithium battery according to an embodiment of the present disclosure.

FIGS. 2-5 are simplified diagrams showing rechargeable lithium batteries according to embodiments of the present disclosure.

## DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to disclose the subject matter of the present disclosure and let those skilled in the art fully know the scope of the present disclosure.

In this disclosure, it will be understood that, if (e.g., when) an element is referred to as being on another element, the element can be directly on the other element or intervening elements may be present therebetween. In the drawings, thicknesses of some components may be exaggerated to effectively explain the technical contents of the present disclosure. Like reference numerals refer to like elements throughout the specification.

Unless otherwise specially noted in this description, the expression of singular form may include the expression of plural form. The terms "comprises/includes" and/or "comprising/including" used in this disclosure do not exclude the presence or addition of one or more other components.

In this disclosure, the term "combination thereof" may refer to a mixture, a stack, a composite, a copolymer, an alloy, a blend, and/or a reaction product.

Unless otherwise especially defined in this disclosure, a particle diameter may be an average particle diameter. In embodiments, a particle diameter indicates an average particle diameter ($D_{50}$) where a cumulative volume is 50 volume % in a particle size distribution. The average particle diameter ($D_{50}$) may be measured by any suitable method generally used in the art, for example, by a particle size analyzer, a transmission electron microscope (TEM) image, and/or a scanning electron microscope (SEM) image. In embodiments, a dynamic light-scattering measurement device may be used to perform a data analysis, the number of particles may be counted for each particle size range, and then from this, an average particle diameter ($D_{50}$) value may be obtained through a calculation. In embodiments, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of, for example, 28 kHz at a power of 60 W, and then an average particle diameter ($D_{50}$) may be calculated in the 50% standard of particle diameter distribution in the measurement device.

In this description, unless otherwise separately defined, the term "substituted" indicates that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

In more detail, the term "substituted" may indicate that at least one hydrogen of a substituent or a compound is substituted by deuterium, a halogen group, a C1 to C30 alkyl group, a C1 to C10 alkylsilyl group, a C6 to C30 arylsilyl group,

a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may indicate that at least one hydrogen of a substituent or a compound is substituted by deuterium, a halogen group, a C1 to C20 alkyl group, a C6 to C30 aryl group, a C1 to C10 fluoroalkyl group, or a cyano group. In embodiments, the term "substituted" may indicate that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated with the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 or the negative electrode 20.

**Positive Electrode 10**

The positive electrode 10 for a rechargeable lithium battery may include a positive electrode current collector COL1 and a positive electrode active material layer AML1 on the positive electrode current collector COL1. The positive electrode active material layer AML1 may include a positive electrode active material and further include a binder and/or a conductive material (e.g., an electrically conductive material).

For example, the positive electrode 10 may further include an additive that can serve as a sacrificial positive electrode.

An amount of the positive electrode active material may be 90 wt% to 99.5 wt% relative to 100 wt% of the positive electrode active material layer AML1. An amount of each of the binder and the conductive material may be 0.5 wt% to 5 wt% relative to 100 wt% of the positive electrode active material layer AML1.

The binder may serve to improve attachment of positive electrode active material particles to each other and also to improve attachment of the positive electrode active material to the positive electrode current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be used to provide an electrode with conductivity (e.g., electrical conductivity) or increase electrical conductivity of the electrode, and any suitable conductive material that does not cause a chemical change in a battery (e.g., does not cause an undesirable chemical change in the rechargeable lithium battery) may be used as the conductive material. The conductive material may include, for example, a carbon-based material such as natural graphite, artificial graphite, carbon black, acetylene black, Ketjen black, carbon fiber, carbon nano-fiber, and/or carbon nano-tube; a metal powder and/or metal fiber containing one or more of copper, nickel, aluminum, and/or silver; a conductive polymer (e.g., an electrically conductive polymer) such as a polyphenylene derivative; or a mixture thereof.

Aluminum (Al) may be used as the positive electrode current collector COL1, but the present disclosure is not limited thereto.

**Positive Electrode Active Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound represented by one of chemical

formulae below. $Li_aA_{1-b}X_bO_{2-c}D_c$ (where 0.90≤a≤1.8, 0≤b≤0.5, and 0≤c≤0.05); $Li_aMn_{2-b}X_bO_{4-c}D_c$ (where 0.90≤a≤1.8, 0≤b≤0.5, and 0≤c≤0.05); $Li_aNi_{1-b-c}Co_bX_cO_{2-\alpha}D_\alpha$ (where 0.90≤a≤1.8, 0≤b≤0.5, 0≤c≤0.5, and 0<α<2); $Li_aNi_{1-b-c}Mn_bX_cO_{2-\alpha}D_\alpha$ (where 0.90≤a≤1.8, 0≤b≤0.5, 0≤c≤0.5, and 0<α<2); $Li_aNi_bCo_cL^1_dG_eO_2$ (where 0.90≤a≤1.8, 0≤b≤0.9, 0≤c≤0.5, 0≤d≤0.5, and 0≤e≤0.1); $Li_aNiG_bO_2$ (where 0.90≤a≤1.8 and 0.001≤b≤0.1); $Li_aCoG_bO_2$ (where 0.90≤a≤1.8 and 0.001≤b≤0.1); $Li_aMn_{1-b}G_bO_2$ (where 0.90≤a≤1.8 and 0.001≤b≤0.1); $Li_aMn_2G_bO_4$ (where 0.90≤a≤1.8 and 0.001≤b≤0.1); $Li_aMn_{1-g}G_gPO_4$ (where 0.90≤a≤1.8 and 0≤g≤0.5); $Li_{(3-f)}Fe_2(PO_4)_3$ (where 0≤f≤2); and $Li_aFePO_4$ (where 0.90≤a≤1.8).

In the chemical formulae above, A is Ni, Co, Mn, or a combination thereof, X is Al, Ni, Co, Mn, Cr, Fe, Mg, Sr, V, a rare-earth element, or a combination thereof, D is O, F, S, P, or a combination thereof, G is Al, Cr, Mn, Fe, Mg, La, Ce, Sr, V, or a combination thereof, and $L^1$ is Mn, Al, or a combination thereof.

For example, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

**Negative Electrode 20**

The negative electrode 20 for a rechargeable lithium battery may include a negative electrode current collector COL2 and a negative electrode active material layer AML2 on the negative electrode current collector COL2. The negative electrode active material layer AML2 may include a negative electrode active material and may further include a binder and/or a conductive material (e.g., an electrically conductive material).

For example, the negative electrode active material layer AML2 may include a negative electrode active material of 90 wt% to 99 wt%, a binder of 0.5 wt% to 5 wt%, and a conductive material (e.g., an electrically conductive material) of 0 wt% to 5 wt%.

The binder may serve to improve attachment of negative electrode active material particles to each other and also to improve attachment of the negative electrode active material to the negative electrode current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If (e.g., when) an aqueous binder is used as the negative electrode binder, a cellulose-based compound capable of providing or increasing viscosity may further be included. The cellulose-based compound may include one or more of carboxymethyl cellulose, hydroxypropylmethyl cellulose, methyl cellulose, and/or alkali metal salts thereof. The alkali metal may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity (e.g., electrical conductivity) or increase electrical conductivity of the electrode, and any suitable conductive material that does not cause a chemical change in a battery (e.g., does not cause an undesirable chemical change in the rechargeable lithium battery) may be used as the conductive material. For example, the conductive material may include a carbon-based material such as natural graphite, artificial graphite, carbon black, acetylene black, Ketjen black, carbon fiber, carbon nano-fiber, and/or carbon nano-tube; a metal powder and/or metal fiber including one or more of copper, nickel, aluminum, and/or silver; a conductive polymer (e.g., an electrically conductive polymer) such as a polyphenylene derivative; or a mixture thereof.

The negative electrode current collector COL2 may include a copper foil, a nickel foil, a stainless-steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, and/or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke. The carbon-based negative electrode active material may include, for example, a mixture of artificial graphite and natural graphite.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, $SiO_x$ (where $0<x\leq2$), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_x$ (where $0<x\leq2$)(for example, $SnO_2$), a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

**Separator 30**

Based on a type (or kind) of the rechargeable lithium battery, the separator 30 may be present between the positive electrode 10 and the negative electrode 20. The separator 30 may include one or more selected from among polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, which coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer and/or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be present mixed in one coating layer or may be present as a stack of a coating layer including the organic material and a coating layer including an inorganic material.

**Electrolyte ELL**

The electrolyte ELL for a rechargeable lithium battery may include a non-aqueous organic solvent and a lithium salt. The non-aqueous organic solvent may serve as a medium that transmits ions that participate in an electrochemical reaction of the battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl

propionate, ethyl propionate, decanolide, mevalonolactone, valerolactone, caprolactone, and/or propyl propionate (PP).

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

The non-aqueous organic solvent may be used alone or in a mixture of two or more substances.

In embodiments, if (e.g., when) a carbonate-based solvent is used, a cyclic carbonate and a chain carbonate may be mixed and used, and the cyclic carbonate and the chain carbonate may be mixed in a volume ratio of 1:1 to 1:9.

The lithium salt may include, for example, at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), Lithium bis(trifluoromethanesulphonyl)imide (LiTFSI), lithium tetrafluoro(oxalato)phosphate (LiOTFP), and lithium bis(oxalato)borate (LiBOB).

The following will describe in more detail an electrolyte for a rechargeable lithium battery according to some embodiments of the present disclosure.

An electrolyte for a rechargeable lithium battery according to an embodiment may include a non-aqueous organic solvent, a lithium salt, and an additive, and the additive may include a first compound represented by Chemical Formula 1 and a second compound represented by Chemical Formula 2.

[Chemical Formula 1]

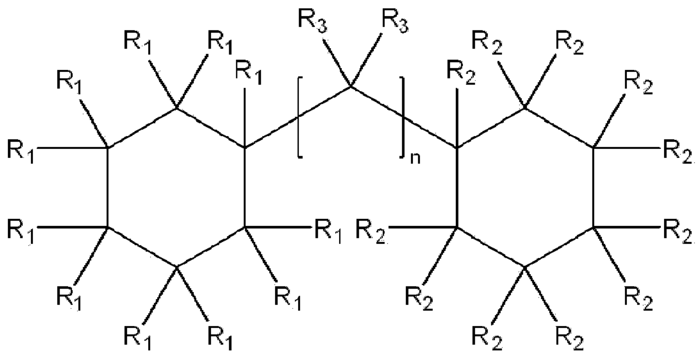

In Chemical Formula 1,

$R_1$ are each independently hydrogen, halogen, a C1 to C10 alkyl group, or an isocyanate group, and at least one of $R_1$ may be an isocyanate group.
$R_2$ are each independently hydrogen, halogen, a C1 to C10 alkyl group, or an isocyanate group, and at least one of $R_2$ may be an isocyanate group,
$R_3$ are each independently hydrogen or a cyclohexyl isocyanate residue.

The subscript n is an integer of 1 to 10.

[Chemical Formula 2]

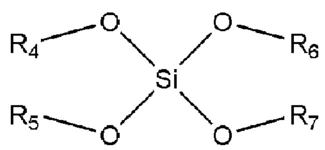

In Chemical Formula 2,
$R_4$ to $R_7$ are each independently a substituted or unsubstituted C1 to C10 alkyl group.

The additive will be further discussed in more detail below.

The electrolyte may be prepared by a mixing process in which a lithium salt is dissolved in a non-aqueous organic solvent and the additive including compounds represented by Chemical Formulae 1 and 2 is added to mix. The electrolyte mixing process any suitable one utilized in the electrolyte fabrication field, and a person skilled in the art will be able to suitably or appropriately select and use the electrolyte mixing process upon reviewing this disclosure.

The non-aqueous organic solvent may include a carbonate-based solvent. In an embodiment, the non-aqueous organic solvent may include at least one selected from ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).

In an embodiment, the non-aqueous organic solvent may include ethylene carbonate (EC), ethylmethyl carbonate (EMC), and/or dimethyl carbonate (DMC).

In an embodiment, the ethylene carbonate (EC) may be included in an amount of 10 vol% to 30 vol% relative to the total volume of the non-aqueous organic solvent. The ethylmethyl carbonate (EMC) may be included in an amount of 30 vol% to 50 vol% relative to the total volume of the non-aqueous organic solvent. The dimethyl carbonate (DMC) may be included in an amount of 30 vol% to 50 vol% relative to the total volume of the non-aqueous organic solvent. In another embodiment, the ethylene carbonate (EC) may be included in an amount of 15 vol% to 25 vol% relative to the total volume of the non-aqueous organic solvent. The ethylmethyl carbonate (EMC) may be included in an amount of 35 vol% to 45 vol% relative to the total volume of the non-aqueous organic solvent. The dimethyl carbonate (DMC) may be included in an amount of 35 vol% to 45 vol% relative to the total volume of the non-aqueous organic solvent. Within the volume ranges above, the additive may achieve optimal or improved solubility to yield a more or even the most suitable effect.

The ethylene carbonate (EC), ethylmethyl carbonate (EMC), and dimethyl carbonate (DMC) may have a volume ratio of 1:a:b. The "a" may be 1 to 3, and the "b" may be 1 to 3. Within the volume ratio above, the additive may achieve optimal or improved solubility to yield a more or even the most suitable effect.

In an embodiment, the lithium salt may include $LiPF_6$.

The lithium salt may have a concentration of 0.1 M to 2.0 M. For example, the lithium salt may have a concentration of equal to or greater than 0.5 M or equal to or greater than 1.0 M. The lithium salt may have a concentration of equal to or less than 2.0 M, equal to or less than 1.7 M, or equal to or less than 1.5 M. In embodiments of the present disclosure, if (e.g., when) the lithium salt has a concentration of 0.1 M to 2.0 M, the electrolyte may suitably or appropriately maintain its conductivity (e.g., electrical conductivity) and viscosity.

## Additive

The additive according to the present disclosure may include a first compound represented by Chemical Formula 1 and a second compound represented by Chemical Formula 2.

In an embodiment, the first compound represented by Chemical Formula 1 may be represented by Chemical Formula 1-1.

[Chemical Formula 1-1]

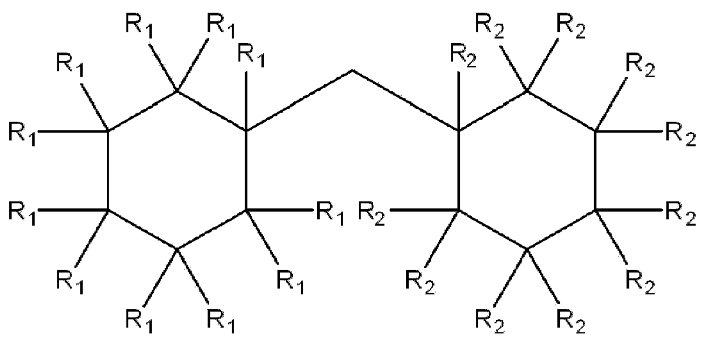

In Chemical Formula 1-1,

$R_1$ are each independently hydrogen, halogen, a C1 to C10 alkyl group, or an isocyanate group, and at least one of $R_1$ may be an isocyanate group.

$R_2$ are each independently hydrogen, halogen, a C1 to C10 alkyl group, or an isocyanate group, and at least one of $R_2$ may be an isocyanate group.

In an embodiment, the first compound represented by Chemical Formula 1 may be represented by Chemical Formula 1-2.

[Chemical Formula 1-2]

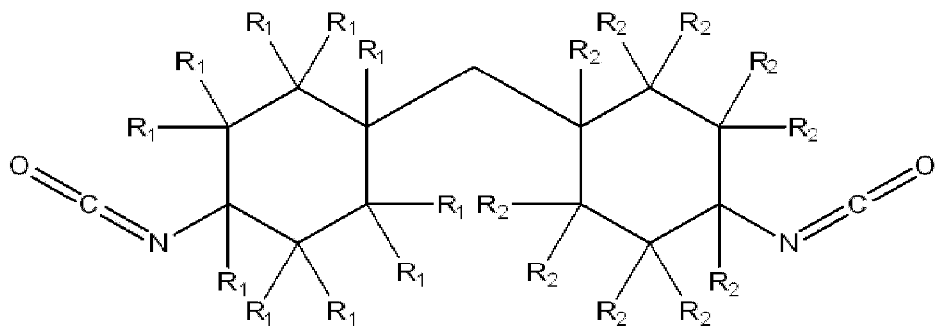

In Chemical Formula 1-2,

$R_1$ are each independently hydrogen, halogen, or a C1 to C10 alkyl group.
$R_2$ are each independently hydrogen, halogen, or a C1 to C10 alkyl group.

An amount of the first compound represented by Chemical Formula 1 may be 0.01 parts by weight to 5 parts by weight relative to 100 parts by weight of the electrolyte for a rechargeable lithium battery. For example, the amount of the first compound represented by Chemical Formula 1 may be 0.05 parts by weight to 3 parts by weight, or 0.01 parts by weight to 1 part by weight, relative to 100 parts by weight of the electrolyte for a rechargeable lithium battery. The amount of the first compound may refer to a weight of the first compound included in the total weight of the electrolyte. If (e.g., when) the amount of the first compound falls within the ranges above, it may be possible to maximize or increase effects of improving battery cycle-life characteristics and battery storage performance at high temperatures.

An amount of the second compound represented by Chemical Formula 2 may be 0.01 parts by weight to 5 parts by weight relative to 100 parts by weight of the electrolyte for a rechargeable lithium battery. For example, the amount of the second compound represented by Chemical Formula 2 may be 0.05 parts by weight to 3 parts by weight, or 0.01 parts by weight to 1 part by weight, relative to 100 parts by weight of the electrolyte for a rechargeable lithium battery. The amount of the second compound may refer to a weight of the second compound included in the total weight of the electrolyte. If (e.g., when) the amount of the second compound falls within the ranges above, it may be possible to maximize or increase effects of improving battery cycle-life characteristics and battery storage performance at high temperatures.

The additive may include the first compound and the second compound in a weight ratio of 5:1 to 1:5. For example, the additive may include the first compound and the second compound in a weight ratio of 3:1 to 1:3. In embodiments, the additive may include the first compound and the second compound in a weight ratio of 2:1 to 1:2. For example, the additive may include the first compound and the second compound in a weight ratio of 1.5:1 to 1:1.5.

The first compound represented by Chemical Formula 1 and the second compound represented by Chemical Formula 2 may function to control moisture and concurrently (e.g., simultaneously) to suppress or reduced side reactions caused by transition metals eluted from the positive electrode. In embodiments, the first compound and the second compound may function to suppress or reduce the reduction of transition metal, which is eluted from the positive electrode, at a negative electrode interface, thereby protecting the negative electrode. Accordingly, it may be possible to effectively prevent or reduce degradation in cell performance during charge/discharge procedures and high-temperature storage.

The first compound represented by Chemical Formula 1 and the second compound represented by Chemical Formula 2 may produce a synergic effect if (e.g., when) used simultaneously. For example, more excellent effects may be achieved if (e.g., when) the first compound and the second compound are mixed and added to satisfy the amount ranges of the present disclosure than if (e.g., when) each of the first and second compounds is added alone.

These effects of the additive including the first compound and the second compound may become more pronounced if (e.g., when) used with a positive electrode active material including at least one selected from a lithium iron phosphate-based positive electrode active material and a lithium nickel-based positive electrode active material.

## Rechargeable Lithium Battery

Based on a shape of a rechargeable lithium battery, the rechargeable lithium battery may be classified into cylindrical, prismatic, pouch, and coin types. FIGS. 2-5 are simplified diagrams showing a rechargeable lithium battery

according to an embodiment, with FIG. 2 showing a cylindrical battery, FIG. 3 showing a prismatic battery, and FIGS. 4-5 showing pouch-type batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which electrode tab 70 serves as an electrical path for externally inducing a current generated in the electrode assembly 40.

The rechargeable lithium battery according to an embodiment of the present disclosure may be applied to automotive vehicles, mobile phones, and/or any other suitable electrical devices, but the present disclosure is not limited thereto.

In the rechargeable lithium battery according to an embodiment of the present disclosure, a non-aqueous electrolyte may be decomposed during an initial charge-discharge to form a film having passivation ability on the surfaces of the positive and negative electrodes to improve high-temperature storage characteristics. The film may be deteriorated due to acid such as $HF^-$ and $PF_5^-$ produced by thermal decomposition of lithium salts ($LiPF_6$ and the like) widely used in lithium ion batteries. This acid attack may elute transition metal elements from the positive electrode and increase an electrode surface resistance (e.g., electrical resistance) caused by a structural change of the surface. Thus, a theoretical capacity may be reduced due to loss of metal elements which are redox (reduction and oxidation) centers, which may result in a reduction in capacity. The eluted transition metal ions may be electrodeposited on the negative electrode that reacts in a strong reduction potential range. Therefore, electrons may be consumed and the film may be destroyed during the electrodeposition, and accordingly, the surface of the negative electrode may be exposed to cause an additional electrolyte decomposition reaction. There may thus be an increase in resistance (e.g., electrical resistance) of the negative electrode and in irreversible capacity, and as a result, there may be a problem of continuous reduction in cell capacity.

In embodiments of the present disclosure, the first compound represented by Chemical Formula 1 and the second compound represented by Chemical Formula 2 may suppress or reduce side reactions of transition metals eluted from the positive electrode. In embodiments, the first compound and the second compound may suppress or reduce the reduction of transition metal, which is eluted from the positive electrode, at a negative electrode interface, thereby protecting the negative electrode. Accordingly, the problems above may be mitigated to yield effects of improving battery cycle-life characteristics and storage performance. The effects may become more pronounced at high temperatures.

The following will describe some embodiments and comparative examples of the present disclosure. The following embodiments, however, are merely examples, and the present disclosure is not limited to the embodiments discussed below.

**Embodiment 1**

**(1) Preparation of Electrolyte**

$LiPF_6$ of 1.5 M was dissolved in a non-aqueous organic solvent containing ethylene carbonate (EC), ethylmethyl carbonate (EMC), and dimethyl carbonate (DMC) mixed in a volume ratio of 20:40:40, and an additive was added to prepare an electrolyte.

The additive may include a first compound in an amount of 0.25 parts by weight relative to 100 parts by weight of the electrolyte and a second compound in an amount of 0.5 parts by weight relative to 100 parts by weight of the electrolyte.

A material represented by Chemical Formula 1-3 was used as the first compound, and a material represented by Chemical Formula 2-1 was used as the second compound.

[Chemical Formula 1-3]

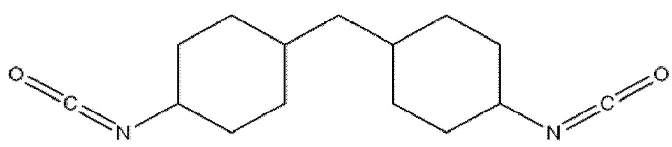

[Chemical Formula 2-1]

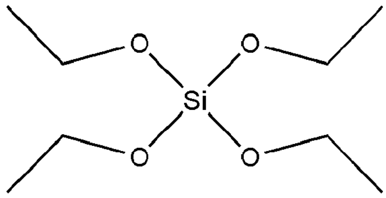

(2) Fabrication of Rechargeable Lithium Battery

$LiFePO_4$ as a positive electrode active material, polyvinylidene fluoride as a binder, and Ketjen black as a conductive material were mixed in a weight ratio of 96:3:1, and the mixture was dispersed in N-methyl pyrrolidone to prepare a positive electrode active material slurry.

The positive electrode active material slurry was coated on an aluminum current collector of 15 μm in thickness, dried at 100 °C, and then pressed to manufacture a positive electrode.

Artificial graphite as a negative electrode active material, a styrene-butadiene rubber (SBR) binder, and carboxymethyl cellulose (CMC) as a thickener were mixed in a weight ratio of 98:1:1, and the mixture was dispersed in distilled water to prepare a negative electrode active material slurry.

The negative electrode active material slurry was coated on a copper current collector of 10 μm in thickness, dried at 100 °C, and then pressed to manufacture a negative electrode.

The positive electrode, the negative electrode, and a polyethylene separator of 10 μm in thickness were assembled to manufacture an electrode assembly, and the electrolyte was introduced to fabricate a rechargeable lithium battery.

**Embodiment 2**

An electrolyte and a rechargeable lithium battery were fabricated according to substantially the same method as that in Embodiment 1, except that the additive included the first compound in an amount of 0.5 parts by weight relative to 100 parts by weight of the electrolyte and the second compound in an amount of 0.25 parts by weight relative to 100 parts by weight of the electrolyte.

**Embodiment 3**

An electrolyte and a rechargeable lithium battery were fabricated according to substantially the same method as that in Embodiment 1, except that the additive included the first compound in an amount of 0.5 parts by weight relative to 100 parts by weight of the electrolyte and the second compound in an amount of 0.5 parts by weight relative to 100 parts by weight of the electrolyte.

**Comparative 1**

An electrolyte and a rechargeable lithium battery were fabricated according to substantially the same method as that in Embodiment 1, except that the additive did not include any of the first compound and the second compound.

**Comparative 2**

An electrolyte and a rechargeable lithium battery were fabricated according to substantially the same method as that in Embodiment 1, except that the additive included the first compound in an amount of 0.5 parts by weight relative to 100 parts by weight of the electrolyte and the second compound in an amount of 10 parts by weight relative to 100 parts by weight of the electrolyte.

**Comparative 3**

An electrolyte and a rechargeable lithium battery were fabricated according to substantially the same method as that in Embodiment 1, except that the additive included the first compound in an amount of 10 parts by weight relative to 100 parts by weight of the electrolyte and the second compound in an amount of 0.5 parts by weight relative to 100 parts by weight of the electrolyte.

**Comparative 4**

An electrolyte and a rechargeable lithium battery were fabricated according to substantially the same method as that in Embodiment 1, except that the additive included the first compound in an amount of 0.2 parts by weight relative to 100 parts by weight of the electrolyte and the second compound in an amount of 2 parts by weight relative to 100 parts by weight of the electrolyte.

**Comparative 5**

An electrolyte and a rechargeable lithium battery were fabricated according to substantially the same method as that in Embodiment 1, except that the additive included the first compound in an amount of 2 parts by weight relative to 100 parts by weight of the electrolyte and the second compound in an amount of 0.2 parts by weight relative to 100 parts by weight of the electrolyte.

**Evaluation 1: Room-Temperature Performance**

Each of the rechargeable lithium batteries fabricated according to the Embodiments and Comparatives was charged and discharged for 1,000 cycles to calculate a capacity retention rate and a resistance (DCIR) change rate. The charge conditions were 25 °C, 0.5 C, 4.2 V, and 0.2 C cut-off. The discharge conditions were 25 °C, 0.5 C, and 2.5 V cut-off. The resistance was measured by using electrochemical impedance spectroscopy (EIS). The capacity retention rate was calculated according to Equation 1, and the DCIR change rate was calculated according to Equation 2. The results are shown in Table 1.

Capacity retention rate (%) = (discharge capacity after 1,000 cycles / discharge capacity after 1 cycle) × 100 [Equation 1]

[Equation 2]

DCIR change rate (%) = (DCIR after 1000 cycles / DCIR after 1 cycle) × 100

**Evaluation 2: High-Temperature Performance**

Each of the rechargeable lithium batteries fabricated according to the Embodiments and Comparative examples was charged under the conditions of 60 °C, 0.33 C, 4.2 V, and 0.02 C cut-off, and initial capacities of the battery were measured. The rechargeable lithium battery was rested at 60 °C for 60 days, and then capacities were measured. The resistance was measured by using electrochemical impedance spectroscopy (EIS). A capacity retention rate and a DCIR change rate were calculated according to Equation 3 and Equation 4, respectively. The results are shown in Table 1.

[Equation 3]

Capacity recovery rate (%) = { capacity after rested for 60 days / initial capacity} × 100

[Equation 4]

DCIR change rate (%) = (DCIR after rested for 60 days / initial DCIR) × 100

[Table 1]

| | Amount | Evaluation result | | | | |
|---|---|---|---|---|---|---|
| | Chemical Formula 1-3 (wt%) | Chemical Formula 2-1 (wt%) | Room-temp capacity retention rate (%) | Room-temp. DCIR change rate (%) | Capacity recovery rate (%) | High-temp DCIR change rate (%) |
| Comparative 1 | 0 | 0 | 81.9 | 114.3 | 91.8 | 120.1 |
| Comparative 2 | 0.5 | 10 | 83.1 | 113.8 | 89.5 | 118.2 |
| Comparative 3 | 10 | 0.5 | 84.2 | 111.4 | 90.2 | 115.5 |
| Comparative 4 | 0.2 | 2 | 88.7 | 104.2 | 92.6 | 107.2 |
| Comparative 5 | 2 | 0.2 | 89.5 | 103.6 | 93.5 | 106.3 |
| Embodiment 1 | 0.25 | 0.5 | 91.2 | 101.5 | 94.8 | 104.1 |
| Embodiment 2 | 0.5 | 0.25 | 92.6 | 102.1 | 95.4 | 103.8 |
| Embodiment 3 | 0.5 | 0.5 | 93.5 | 100.7 | 97.7 | 100.5 |

Referring to Table 1, it can be seen that the Embodiments according to the present disclosure exhibit high-temperature performance superior to that of the Comparatives. For example, it can be seen that the additive according to embodiments of the present disclosure has an excellent effect of improving battery performance at high temperatures.

An electrolyte for a rechargeable lithium battery according to embodiments of the present disclosure may have effects of improving battery cycle-life characteristics and increasing battery storage performance at high temperatures. Accordingly, it may be possible to provide a rechargeable lithium battery having superior performance.

## Claims

1. An electrolyte for a rechargeable lithium battery (100), the electrolyte comprising:

a non-aqueous organic solvent;
a lithium salt; and
an additive,
wherein the additive comprises:

a first compound represented by Chemical Formula 1; and
a second compound represented by Chemical Formula 2,

[Chemical Formula 1]

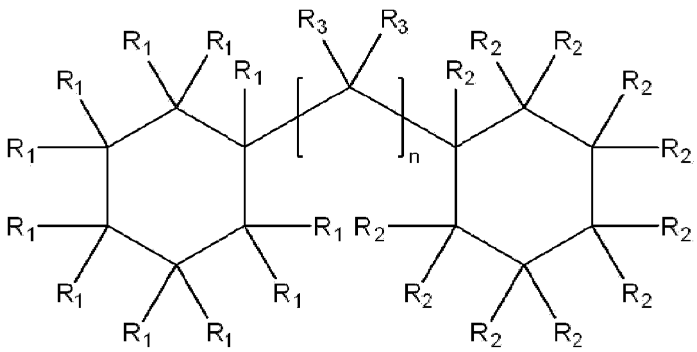

wherein, in Chemical Formula 1,

$R_1$ are each independently hydrogen, halogen, a C1 to C10 alkyl group, or an isocyanate group, wherein at least one of $R_1$ is an isocyanate group,
$R_2$ are each independently hydrogen, halogen, a C1 to C10 alkyl group, or an isocyanate group, wherein at least one of $R_2$ is an isocyanate group,
$R_3$ are each independently hydrogen or a cyclohexyl isocyanate residue, and
n is an integer of 1 to 10, and

[Chemical Formula 2]

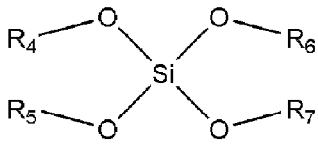

wherein, in Chemical Formula 2,
$R_4$ to $R_7$ are each independently a substituted or unsubstituted C1 to C10 alkyl group,
wherein the term "substituted" indicates that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

2. The electrolyte as claimed in claim 1, wherein the first compound is included in an amount of 0.01 wt% to 5 wt% relative to a total weight of the electrolyte for the rechargeable lithium battery.

3. The electrolyte as claimed in claim 1 or 2, wherein the second compound is included in an amount of 0.01 wt% to 5 wt% relative to a total weight of the electrolyte for the rechargeable lithium battery.

4. The electrolyte as claimed in any one of the preceding claims, wherein the first compound and the second compound are included in a weight ratio of 5:1 to 1:5.

5. The electrolyte as claimed in claim 4, wherein the first compound and the second compound are included in a weight ratio of 2:1 to 1:2.

6. The electrolyte as claimed in any one of the preceding claims, wherein the first compound represented by Chemical Formula 1 is represented by Chemical Formula 1-1,

[Chemical Formula 1-1]

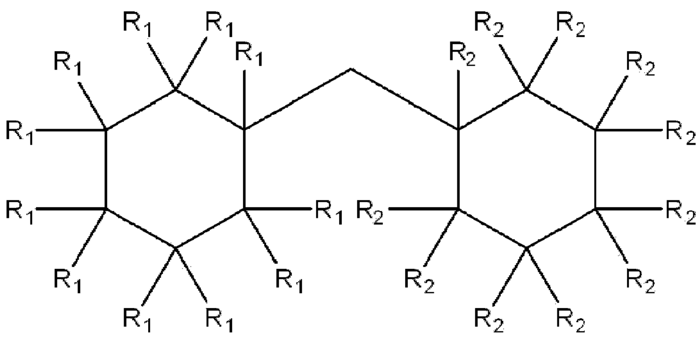

wherein, in Chemical Formula 1-1,

$R_1$ are each independently hydrogen, halogen, a C1 to C10 alkyl group, or an isocyanate group, wherein at least one of $R_1$ is an isocyanate group, and
$R_2$ are each independently hydrogen, halogen, a C1 to C10 alkyl group, or an isocyanate group, wherein at least one of $R_2$ is an isocyanate group.

**7.** The electrolyte as claimed in claim 6, wherein Chemical Formula 1 is represented by Chemical Formula 1-2,

[Chemical Formula 1-2]

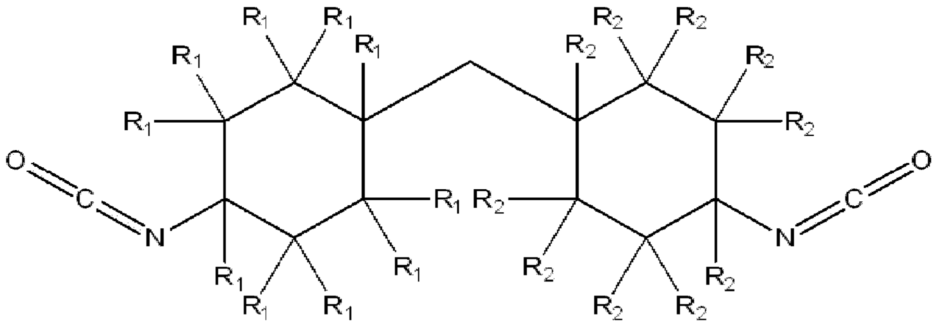

wherein, in Chemical Formula 1-2,

$R_1$ are each independently hydrogen, halogen, or a C1 to C10 alkyl group, and
$R_2$ are each independently hydrogen, halogen, or a C1 to C10 alkyl group.

**8.** The electrolyte as claimed in any one of the preceding claims, wherein the lithium salt comprises one or more of $LiPF_6$, $LiClO_4$, $LiBF_4$, LiTFSI, $LiSO_3CF_3$, LiBOB, LiDFOB, LiDFBOP, LiOTFP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate,and $LiC_4F_9SO_3$.

**9.** The electrolyte as claimed in claim 8, wherein the lithium salt comprises $LiPF_6$.

**10.** The electrolyte as claimed in any one of the preceding claims, wherein the non-aqueous organic solvent comprises a carbonate-based solvent.

**11.** The electrolyte as claimed in claim 10, wherein the carbonate-based solvent comprises ethylene carbonate (EC), ethylmethyl carbonate (EMC), dimethyl carbonate (DMC), or a combination thereof.

**12.** A rechargeable lithium battery (100), comprising:

a positive electrode (10) that comprises a positive electrode active material;
a negative electrode (20) that comprises a negative electrode active material; and
the electrolyte as claimed in any one of the preceding claims.

**13.** The rechargeable lithium battery as claimed in claim 12, wherein the positive electrode active material comprises a lithium iron phosphate-based positive electrode active material or lithium composite oxide represented by Chemical Formula 3,

[Chemical Formula 3] $Li_xM^1{}_yM^2{}_zM^3{}_{1-y-z}O_{2-a}X_a$

wherein, in Chemical Formula 3,

$0.5 \le x \le 1.8$, $0 \le a \le 0.05$, $0 < y \le 1$, $0 \le z \le 1$, and $0 < y+z \le 1$,
$M^1$, $M^2$, and $M^3$ each independently comprise at least one element selected from metals such as Ni, Co, Mn, Al, B, Ba, Ca, Ce, Cr, Fe, Mo, Nb, Si, Sr, Mg, Ti, V, W, Zr, La, and a combination thereof, and
X comprises at least one element selected from F, S, P, and Cl.

**14.** The rechargeable lithium battery as claimed in claim 12 or 13, wherein the negative electrode active material comprises a carbon-based negative electrode active material, a Si-based negative electrode active material, a Sn-based negative electrode active material, or a combination thereof.

**15.** The rechargeable lithium battery as claimed in claim 14, wherein the carbon-based negative electrode active material

is at least one of natural graphite and artificial graphite.

FIG. 1

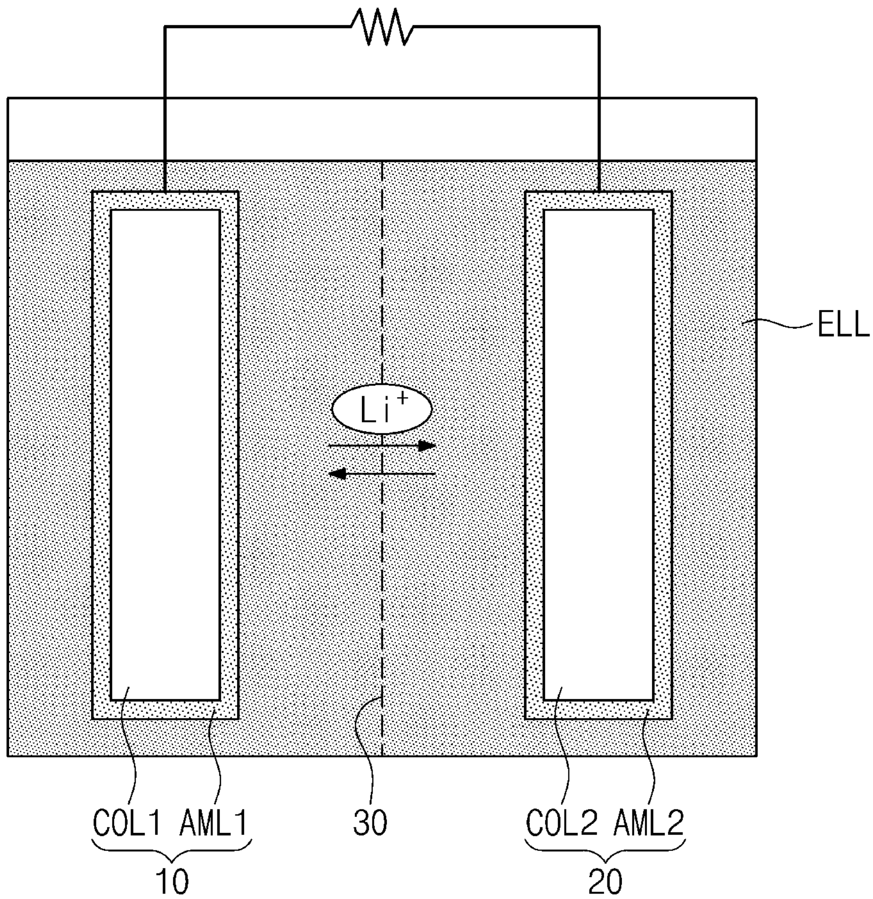

FIG. 2

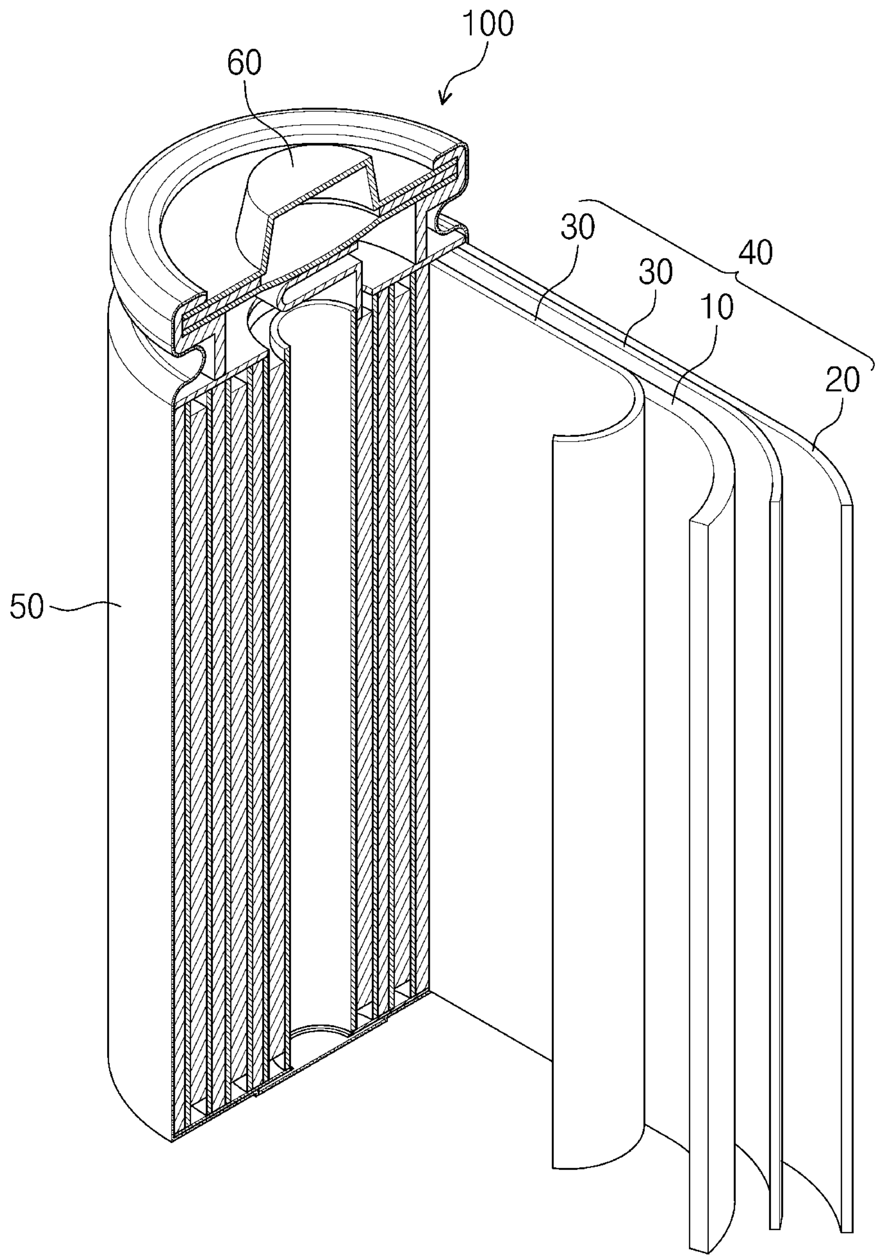

FIG. 3

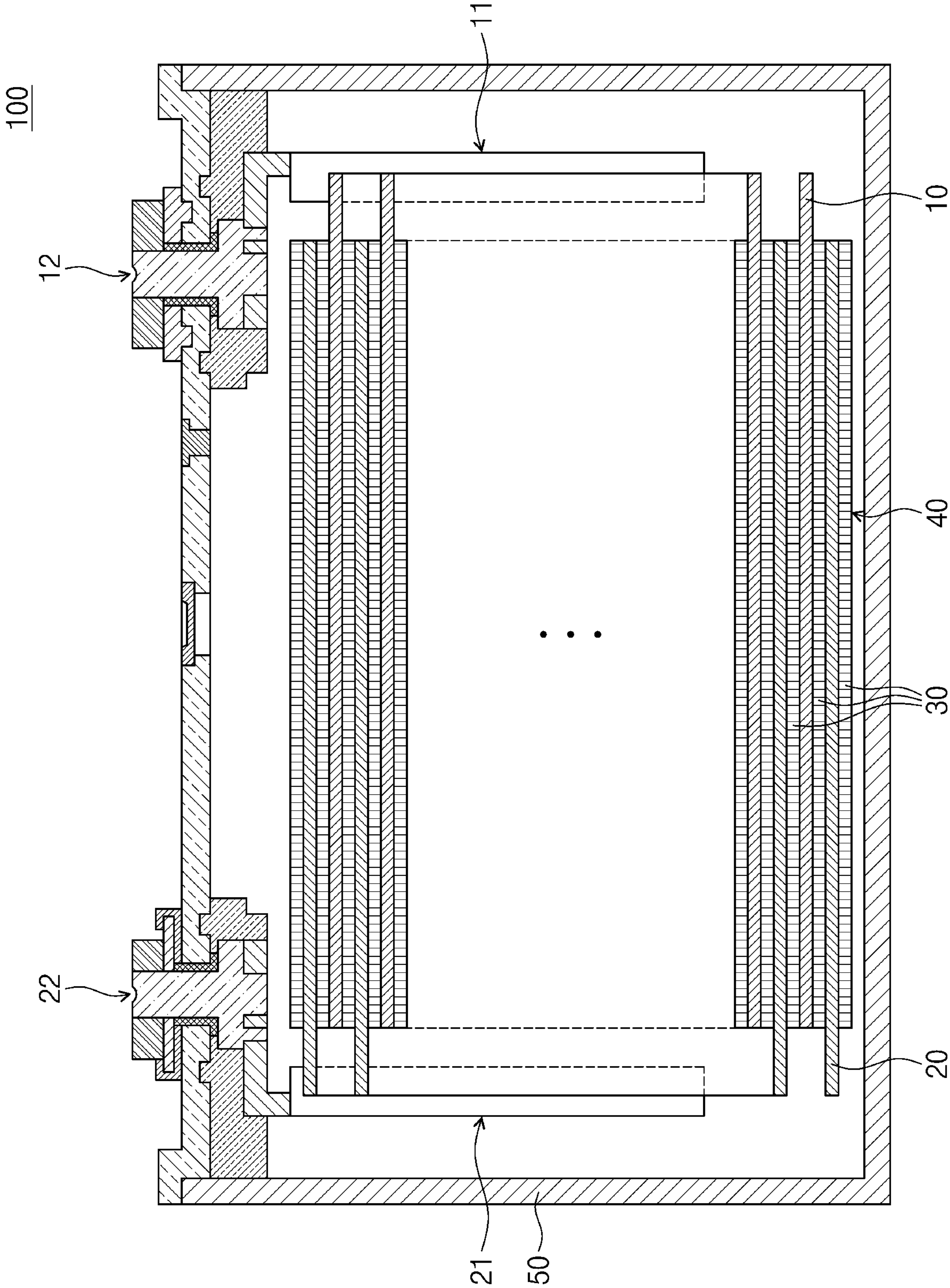

FIG. 4

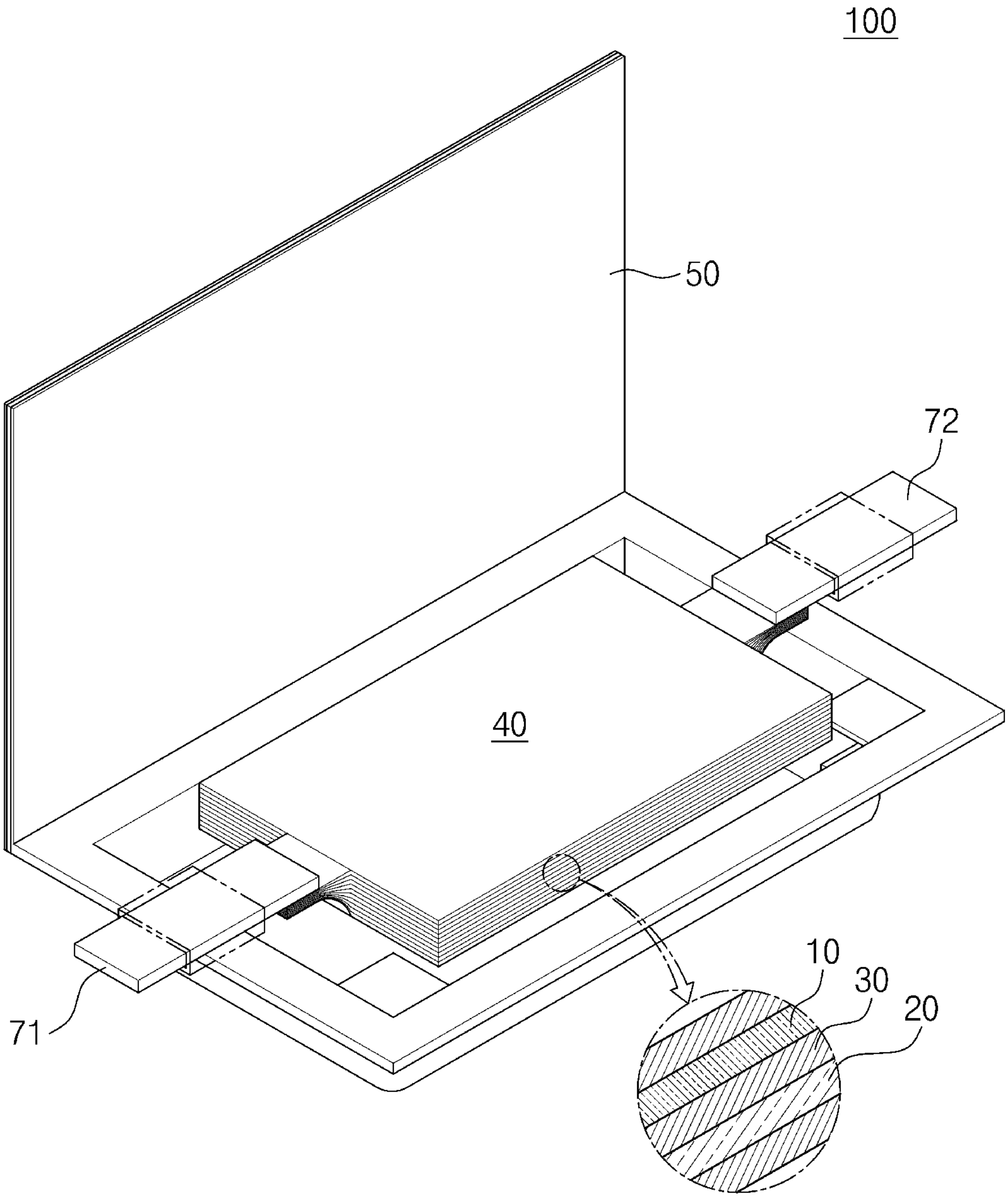

FIG. 5

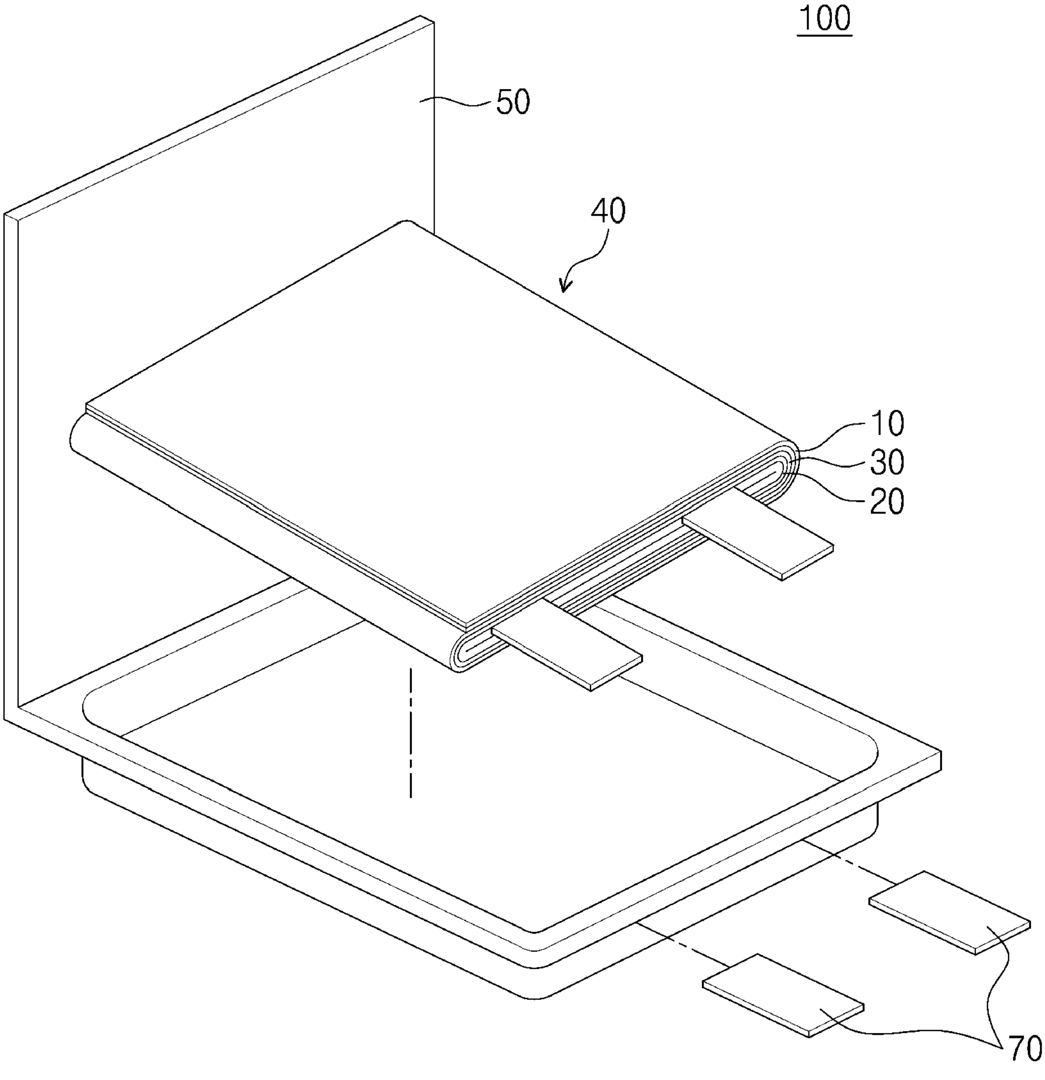

Europäisches Patentamt
European Patent Office
Office européen des brevets

# EUROPEAN SEARCH REPORT

Application Number
EP 25 18 2629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 003 627 A (SUZHOU SIDAQI ENVIRONMENTAL PROT NEW MATERIAL CO LTD) 12 July 2019 (2019-07-12) * example 1, example 2, claims * * the whole document * ----- | 1-15 | INV. H01M4/58 H01M4/587 H01M10/052 H01M10/0525 H01M10/0567 H01M10/0568 H01M10/0569 |
| Y | US 2017/018805 A1 (YOSHIDA HIROAKI [JP]) 19 January 2017 (2017-01-19) * example 5 * * the whole document * ----- | 1-15 | |
| Y | EP 4 293 777 A1 (CONTEMPORARY AMPEREX TECHNOLOGY CO LTD [CN]) 20 December 2023 (2023-12-20) * claim 3 * * the whole document * ----- | 1-15 | |
| A | WO 2023/123366 A1 (DONGJIANG ENVIRONMENTAL COMPANY LTD [CN]) 6 July 2023 (2023-07-06) * examples 1-5 * * the whole document * ----- | 1-15 | TECHNICAL FIELDS SEARCHED (IPC) |
| A | WO 2023/066342 A1 (BEIJING YUCHENG TECH CO LTD [CN]) 27 April 2023 (2023-04-27) * claim 1 * * the whole document * ----- | 1-15 | H01M |
| A | CN 114 361 464 A (DONGJIANG ENVIRONMENTAL PROT CO LTD) 15 April 2022 (2022-04-15) * example 1 * * the whole document * ----- | 1-15 | |
| A,P | EP 4 525 071 A1 (SAMSUNG SDI CO LTD [KR]) 19 March 2025 (2025-03-19) * the whole document * ----- | 1-15 | |

The present search report has been drawn up for all claims

1

| Place of search | Date of completion of the search | Examiner |
|---|---|---|
| The Hague | 12 September 2025 | Ziegler, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 18 2629

This annex lists the patent family members relating to the patent documents cited in the above-mentioned European search report. The members are as contained in the European Patent Office EDP file on
The European Patent Office is in no way liable for these particulars which are merely given for the purpose of information.

12-09-2025

| Patent document cited in search report | | Publication date | Patent family member(s) | | | Publication date |
|---|---|---|---|---|---|---|
| CN 110003627 | A | 12-07-2019 | NONE | | | |
| US 2017018805 | A1 | 19-01-2017 | CN | 106133983 | A | 16-11-2016 |
| | | | EP | 3128596 | A1 | 08-02-2017 |
| | | | JP | WO2015152046 | A1 | 13-04-2017 |
| | | | KR | 20160138087 | A | 02-12-2016 |
| | | | US | 2017018805 | A1 | 19-01-2017 |
| | | | WO | 2015152046 | A1 | 08-10-2015 |
| EP 4293777 | A1 | 20-12-2023 | CN | 116897453 | A | 17-10-2023 |
| | | | EP | 4293777 | A1 | 20-12-2023 |
| | | | JP | 7646851 | B2 | 17-03-2025 |
| | | | JP | 2024514999 | A | 04-04-2024 |
| | | | KR | 20230142727 | A | 11-10-2023 |
| | | | US | 2024274810 | A1 | 15-08-2024 |
| | | | WO | 2023184496 | A1 | 05-10-2023 |
| WO 2023123366 | A1 | 06-07-2023 | US | 2024274835 | A1 | 15-08-2024 |
| | | | WO | 2023123366 | A1 | 06-07-2023 |
| WO 2023066342 | A1 | 27-04-2023 | EP | 4421966 | A1 | 28-08-2024 |
| | | | JP | 2024539498 | A | 28-10-2024 |
| | | | KR | 20240089369 | A | 20-06-2024 |
| | | | US | 2024421431 | A1 | 19-12-2024 |
| | | | WO | 2023066342 | A1 | 27-04-2023 |
| CN 114361464 | A | 15-04-2022 | NONE | | | |
| EP 4525071 | A1 | 19-03-2025 | CN | 119542531 | A | 28-02-2025 |
| | | | EP | 4525071 | A1 | 19-03-2025 |
| | | | JP | 2025036353 | A | 14-03-2025 |
| | | | KR | 20250032539 | A | 07-03-2025 |
| | | | US | 2025079517 | A1 | 06-03-2025 |

EPO FORM P0459

For more details about this annex : see Official Journal of the European Patent Office, No. 12/82